# FASCICULE DE BREVET EUROPEEN

(11) **EP 0 424 210 B1**
(45) Date de publication et mention de la délivrance du brevet: **11.05.1994**
(21) Numéro de dépôt: 90402782.8
(22) Date de dépôt: 05.10.1990
(51) Int. Cl.: B62M 3/08

(54) **Dispositif de fixation d'une chaussure sur une pédale de bicyclette ou d'engin analogue, pédale de bicyclette, cale et semelle de chaussure pour un tel dispositif**
Schuhbefestigungsvorrichtung an einem Fahrradpedal oder dergleichen, Fahrradpedal, Riegel und Schuhsohle für eine derartige Vorrichtung
Fixing device for footwear on a bicycle pedal or similar device, bicycle pedal, chock and shoe sole for such a device

(30) Priorité: 16.10.1989 FR 8913484
(43) Date de publication de la demande: 24.04.1991
(60) Demande divisionnaire: 93200349.4
(73) Titulaire: Beyl, Jean, F-58000 Nevers (FR)
(72) Inventeur: Beyl, Jean, F-58000 Nevers (FR)
(74) Mandataire: Michardière, Bernard

(56) Documents cités:
- EP-A- 0 169 080
- EP-A- 0 296 898
- DE-U- 8 620 037
- FR-A- 2 623 464

## Description

L'invention est relative à un dispositif de fixation d'une chaussure sur une pédale de bicyclette, ou d'engin analogue, ayant un corps de pédale monté rotatif autour d'un axe transversal.

Le dispositif de fixation, concerné par l'invention, est du genre de ceux qui comportent :
- d'une part, sur le corps de pédale, un moyen de butée frontale situé en avant de l'axe transversal et un organe d'accrochage arrière situé en arrière de l'axe, et comprenant un bord d'accrochage rectiligne, sensiblement parallèle à l'axe, pouvant être déplacé suivant une direction sensiblement orthogonale à cet axe, à l'encontre d'un effort de rappel élastique ;
- d'autre part, des moyens de retenue vers le haut prévus sur le corps de pédale, à l'avant de l'axe pour coopérer avec des moyens de retenue complémentaires prévus sous la semelle ;
- d'autre part, enfin, destinée à être fixée sous la semelle de la chaussure, une cale comportant, vers l'avant un moyen de butée frontale conjugué de celui de la pédale, et, à l'arrière, un moyen d'accrochage propre à coopérer avec le bord d'accrochage arrière du corps de pédale, l'enclenchement de la chaussure sur la pédale, pouvant être obtenu par une action de pression du pied sur la pédale,

ladite cale comportant au moins un rebord inférieur d'accrochage en saillie vers l'arrière délimitant une rainure transversale débouchant à chacue extrémité transversale, au moins une extrémité transversale du rebord arrière étant limitée par une paroi inclinée suivant un angle (i) déterminé par rapport à la direction transversale de la cale, le décrochage étant obtenu par échappement du rebord vers le haut pour une torsion d'amplitude égale à l'angle (i) dans un sens donné.

Un dispositif de fixation de ce type est montré par DE-U- 86 20 037. Un tel dispositif présente plusieurs inconvénients, notamment les suivants.

La distance qui sépare les deux rainures transversales détermine à la fois la dureté d'ouverture en torsion et la libération de la chaussure vers le haut, lorsque les barres élastiques viennent tangentiellement au contact du cylindre. Il en résulte d'une part que l'angle de déchaussage ne peut être déterminé que par la fin du rappel élastique, et, d'autre part, qu'au voisinage de la position de décrochage, il n'y a pratiquement plus de rappel élastique. Cette dernière conséquence est particulièrement gênante car elle ne permet pas à l'utilisateur de bien contrôler la libération du pied, et des décrochages intempestifs peuvent se produire.

Si l'on considère qu'une ouverture en torsion de 20° est déjà importante pour que le cycliste puisse déchausser rapidement, un tel angle d'ouverture serait nettement insuffisant, dans un dispositif selon DE-U-86 20 037, pour avoir une certaine dureté de retenue en torsion, car le moment de rappel fait intervenir le sinus de l'angle, qui est faible. Ou alors, il faudrait un ressort lourd et encombrant exerçant une force élevée.

L'enclenchement du dispositif, selon DE-U-86 20 037, nécessite d'engager un manchon dans une sorte de douille ce qui, d'une part, peut rendre difficile un enclenchement "à l'aveugle" et, d'autre part, implique un centre de rotation en torsion, de la chaussure, situé sur l'axe de la douille. Enfin, la coopération de la douille et du manchon supprime toute possibilité d'une certaine liberté en translation latérale de la chaussure relativement à la pédale.

On connaît par ailleurs un dispositif de fixation montré par GB 20 289 (MATTHEWS) notamment à la figure 6. Selon ce document, les conditions de fixation et de séparation de la chaussure relativement à la pédale sont définies d'une manière peu précise de sorte que la fiabilité du dispositif n'est pas totalement satisfaisante. En outre, l'appui vertical de la chaussure sur la pédale s effectue avec une certaine élasticité qui n'est pas favorable à un pédalage sportif.

Par ailleurs, GB-20 289, de même que US-A-4 538 480 et US-A- 4 640 151 montrent qu'il est connu et avantageux d'encastrer, dans la semelle de chaussure, les moyens de fixation fixés sous la semelle, de façon à ne pas gêner la marche à pied du cycliste.

L'invention a pour but, surtout, de fournir un dispositif de fixation qui ne présente plus, ou à un degré moindre, les inconvénients évoqués à propos de DE-U-86 20 037.

L'invention a également pour but de fournir un dispositif de fixation qui permette, tout en assurant un bon accrochage de la chaussure sur la pédale, d'obtenir une libération fiable de la chaussure relativement à la pédale lors d'un mouvement de rotation du pied, tout en opposant au cours de ce mouvement de rotation un moment résistant relativement constant.

Autrement dit, l'invention vise à fournir un dispositif de fixation qui permette d'obtenir la libération de la chaussure, vis à vis de la pédale, lorsqu'un angle de rotation a été atteint, sous une résistance ou dureté sensiblement constante.

On souhaite en outre assurer un appui ferme de la semelle sur la pédale. On souhaite aussi que la cale ait des dimensions réduites pour qu'en cas d'encastrement dans la semelle, celui-ci soit le moins important possible pour conserver une grande surface de semelle réservée à la marche.

EP-A-0 372 165 qui appartient à l'état de la technique selon l'Article 54 (3) et (4) de la CBE montre également un dispositif de fixation du genre défini précédemment, dans lequel, en outre, la cale vue en plan a une forme générale sensiblement rectangulaire tandis que la susdite partie inclinée du rebord arrière est constituée par un pan coupé formant, avec la partie voisine du rebord arrière, un dièdre tournant sa convexité vers l'extérieur,
le moyen de butée frontale et le moyen de retenue vers le haut étant constitués par un seul et même organe d'accrochage avant, situé en avant de l'axe, comportant un bord d'accrochage et de butée frontale pratiquement rectiligne parallèle à l'axe.

Vis-à-vis de ce document, qui ne peut être pris en considération pour l'appréciation de l'activité inventive, selon l'article 56 de la CBE, l'invention définie par la revendication principale, se distingue par le fait :
- que la grande dimension de la cale est orientée parallèlement à l'axe du fût de la pédale **;**
- que l'organe d'accrochage avant est fixe relativement à la pédale, le centre de rotation, lors d'une torsion du pied, étant constitué par un point situé contre l'organe d'accrochage avant de sorte que la cale peut effectuer en torsion une grande course, tout en restant soumise à un rappel élastique ;

et que l'angle est inférieur à l'angle de torsion maximum pour lequel le dispositif exerce encore un rappel élastique sur la cale.

Avantageusement, la course de torsion pendant laquelle la cale reste soumise un rappel élastique est d'environ 60°.

Le bord d'accrochage arrière peut être formé par une barre et l'organe d'accrochage avant peut être formé par une barre, ces barres étant situées au-dessus du plan tangent supérieur au fût du corps de pédale, dans lequel est prévu un logement pour l'axe transversal de pédale.

De préférence, chacune des extrémités transversales du rebord arrière comporte un pan coupé.

Avantageusement, la cale comporte également un rebord inférieur d'accrochage en saillie vers l'avant, délimitant une rainure transversale débouchant à chaque extrémité transversale et les quatre extrémités des rebords de la cale sont munies de pans coupés, notamment parallèles deux à deux aux extrémités opposées, les dièdres formés par ces pans coupés tournant leur convexité vers l'extérieur.

De préférence le(s) pan(s) coupé(s) prévu(s) pour le décrochage par une rotation ou torsion du pied du cycliste vers l'extérieur est (sont) incliné(s) de manière à permettre le décrochage pour un angle inférieur à celui nécessaire pour le décrochage par une torsion du pied vers l'intérieur. L'angle d'inclinaison du pan coupé, pour le décrochage vers l'extérieur, par rapport à la direction transversale de la cale, peut être voisin de ou égal à 20°, tandis que l'angle d'inclinaison du pan coupé pour un décrochage par torsion vers l'intérieur est supérieur, en particulier de l'ordre de 30°.

Avantageusement, les bords d'accrochage avant et arrière prévus sur le corps de pédale, et les rainures transversales de la cale propres à coopérer avec ces bords, sont agencés pour laisser une liberté en coulissement transversal de quelques millimètres, en particulier de l'ordre de 7 mm, pour la semelle et la chaussure relativement à la pédale.

Les surfaces de fond des rainures transversales de la cale peuvent être agencées sous la forme de V ouverts, la pointe des V étant tournée respectivement vers l'avant pour la surface avant et vers l'arrière pour la surface arrière.

De préférence, l'écartement entre le bord de butée frontale et le bord d'accrochage arrière est au plus égal à la moitié de l'étendue transversale de ces bords.

Généralement, le corps de pédale comporte un fût muni d'un logement destiné à recevoir l'axe transversal ; de préférence, ledit écartement entre les bords de butée et d'accrochage est sensiblement égal à la dimension extérieure du fût.

L'organe de butée frontale est avantageusement constitué par un fil métallique, notamment un fil d'acier à grande résistance, ancré dans le corps de pédale. Ce fil forme un arceau et présente, aux extrémités d'une partie rectiligne constituant le bord de butée frontale, deux parties recourbées, sensiblement orthogonales au plan moyen de la pédale propres à encadrer transversalement le rebord, en saillie vers l'avant, de la cale. Le diamètre du fil d'acier est réduit, de préférence d'environ 3 mm.

L'organe d'accrochage arrière peut également former un arceau comprenant une barre transversale rectiligne munie à ses deux extrémités de parties recourbées formant des bras orientés radialement, pour une articulation autour d'un axe transversal, le rebord arrière de la cale étant propre à s'engager sous la barre en étant encadré transversalement par les bras.

Les extrémités des bras éloignées de la barre peuvent être enroulées de manière à constituer deux ressorts de torsion ; ces ressorts de torsion sont avantageusement logés dans un évidement du corps de pédale, les extrémités des ressorts étant dirigées vers l'arrière et prenant appui contre une paroi.

L'invention concerne aussi une semelle de chaussure cycliste destinée à être équipée d'une cale pour un dispositif de fixation tel que défini précédemment, cette semelle étant caractérisée par le fait qu'elle comporte un évidement propre à recevoir la partie supérieure de la pédale.

Avantageusement la semelle comprend une semelle interne en matière rigide pour la fixation de la cale, et une semelle externe en matière relativement souple dans laquelle est prévu le susdit évidement, la surface enveloppe de la semelle externe étant située au-delà de la cale, qui n'est donc pas en contact avec le sol lorsque l'utilisateur marche avec une chaussure équipée d'une telle semelle.

L'invention consiste, mises à part les dispositions exposées ci-dessus, en un certain nombre d'autres dispositions dont il sera plus explicitement question ci-après à propos d'un exemple de réalisation particulier décrit avec référence aux dessins ci-annexés, mais qui n'est nullement limitatif.

La figure 1, de ces dessins, est une vue en plan d'une pédale de bicyclette et d'une chaussure, schématiquement représentée, équipées d'un dispositif de fixation selon l'invention.

La figure 2 est une coupe suivant la ligne II-II figure 1.

La figure 3 est une vue partielle, semblable à la figure 1, alors que la cale a tourné vers l'extérieur (talon vers l'extérieur) relativement à la bicyclette.

La figure 4 est une vue de dessous d'une semelle de chaussure destinée à recevoir la cale du dispositif de fixation.

La figure 5 est une coupe suivant la ligne V-V de la figure 4.

La figure 6, enfin, est un schéma explicatif.

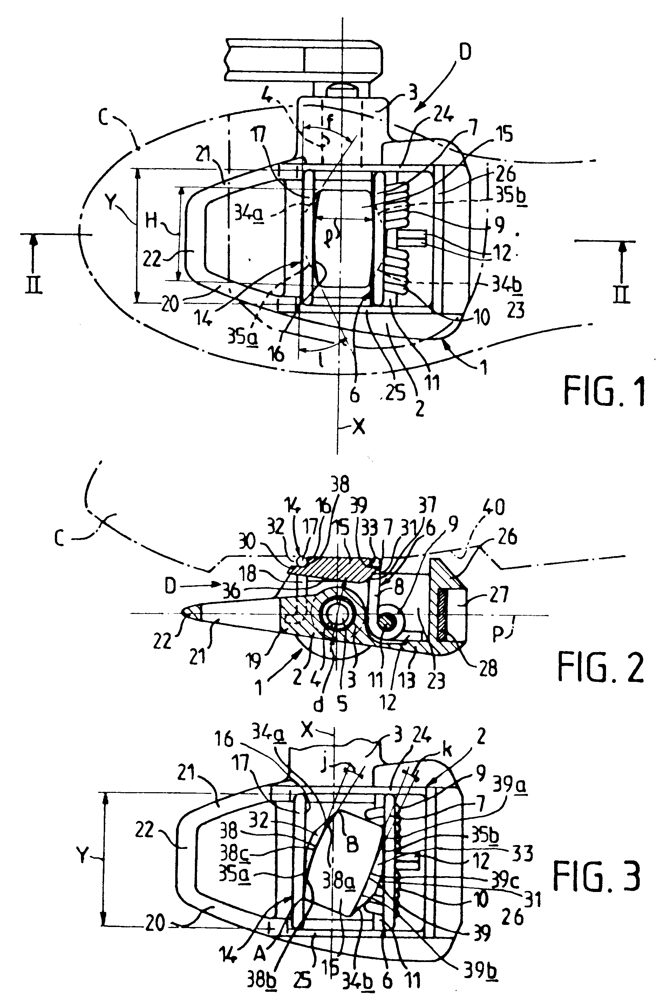

En se reportant aux dessins, notamment aux figures 1 à 3, on peut voir un dispositif D de fixation d'une chaussure C sur une pédale de bicyclette ayant un corps de pédale 2 qui comporte un fût 3 de forme sensiblement cylindrique, muni d'un logement 4 destiné à recevoir un axe transversal 5 pour le montage rotatif du corps de pédale sur cet axe, avec interposition de paliers à billes ou à aiguilles non représentés.

Le corps de pédale 2 comporte un organe d'accrochage 6 situé en arrière du fût. Cet organe d'accrochage est avantageusement réalisé en forme d'arceau, à l'aide d'un fil d'acier à ressort à section circulaire. Il comprend une barre transversale 7 constituant un bord d'accrochage rectiligne, sensiblement parallèle à l'axe géométrique transversal X du fût autour duquel peut tourner la pédale. A chaque extrémité la barre 7 est prolongée par des parties recourbées sensiblement à angle droit formant des bras orientés radialement tels que 8 (figure 2), sensiblement orthogonaux au plan moyen P du corps de pédale 2. Les extrémités des bras 8, éloignées de la barre 7, sont enroulées en sens inverse de manière à constituer deux ressorts de torsion 9, 10 enfilés sur une tige transversale 11 solidaire du corps de pédale. La tige 11 est située au-dessous du plan moyen du corps 2. Les extrémités voisines 12 des ressorts de torsion 9, 10 sont dirigées vers l'arrière et prennent appui contre une paroi inférieure 13 du corps de pédale.

La barre 7 peut être déplacée vers l'arrière, suivant une direction sensiblement orthogonale à l'axe X du fût 3, à l'encontre de l'effort de rappel élastique exercé par les ressorts 9 et 10. En fait, la barre 7 décrit un arc de cercle sensiblement centré sur l'axe de la tige 11.

Il convient de noter que les expressions "arrière" et "avant" utilisées dans le texte sont données en référence avec le sens de progression de la bicyclette équipée de la pédale 1. L'avant de la pédale est la partie située devant l'axe X ; sur les figures 2 et 3, c'est la partie gauche, tandis que la partie droite constitue la partie arrière.

L'organe d'accrochage arrière 6 et son bord d'accrochage 7 sont situés le plus près possible du fût 3. Pratiquement, les bras radiaux 8 sont tangents à la surface arrière du fût 3. A l'état repos, lorsque la barre 7 n'est pas sollicitée vers l'arrière par des forces extérieures, les bras 8 sont sensiblement orthogonaux au plan moyen P du corps de pédale 2.

Dans l'exemple de réalisation considéré, le corps de pédale 2 est muni, en avant du fût 3, d'un organe d'accrochage avant 14 constituant à la fois un moyen de butée frontale et un moyen de retenue vers le haut, coopérant avec une cale 15 fixée sous la semelle de la chaussure.

L'organe d'accrochage avant 14 est fixe relativement à la pédale 1 et comporte un bord d'accrochage rectiligne 16 sensiblement parallèle à l'axe X. L'organe 14 est avantageusement constitué par un fil d'acier à grande résistance ayant un diamètre réduit, notamment d'environ 3 mm.

L'organe 14 forme sensiblement un arceau dont la partie principale est une barre transversale rectiligne 17 parallèle à la barre 7. Les extrémités de la barre 17 sont recourbées sensiblement à angle droit de manière à former des bras 18 sensiblement orthogonaux au plan moyen P. Les extrémités des bras 18 éloignées de la barre 17 sont ancrées dans le corps 2. Le bord 16 est formé par la zone inférieure et la zone arrière de la barre 17.

Les deux barres 7 et 17 sont situées sensiblement à la même distance du plan moyen P et au-dessus du plan tangent supérieur au fût 3.

L'écartement entre la barre avant 17 et la barre arrière 7, alors que la cale 15 n'est pas insérée, est le plus faible possible. Cet écartement est au plus égal à la moitié de l'étendue transversale Y des barres 7 et 17 et, en pratique, est sensiblement égal au diamètre extérieur d du fût 3.

Il est à noter que la forme extérieure de ce fût 3, en section transversale comme visible sur la figure 2, est sensiblement celle d'un demi-cylindre de diamètre d délimité par le plan bissecteur du quadrant gauche supérieur et du quadrant opposé. Le corps de pédale 2 comprend une partie massive 19 qui prolonge vers l'avant le fût 3. L'ancrage des bras 18 est réalisé dans cette partie 19, les bras 18 étant sensiblement tangents à la partie du cercle prolongeant le contour demi-cylindrique du fût 3.

La partie massive 19 du corps de pédale est munie, de chaque côté, d'une branche de prolongement 20, 21. Ces branches convergent vers l'avant et sont reliées entre elles par une traverse 22, à leur extrémité éloignée du fût 3. L'épaisseur de la partie 19, suivant une direction perpendiculaire au plan moyen P, de même que l'épaisseur des branches 20, 21 diminuent progressivement quand on s'éloigne du fût 3.

Le corps de pédale 2 présente, à l'arrière, un évidement 23 dans lequel sont logés les ressorts 9 et 10, cet évidement étant ouvert vers le haut et fermé vers le bas par la plaque 13. L'évidement 23 est délimité sur les côtés par les prolongements de deux parois longitudinales 24, 25, sensiblement orthogonales au plan P, encadrant les organes 6 et 14. Une paroi transversale arrière 26 relie les parois 24 et 25 et ferme l'évidement 23. Cette paroi 26 comporte un logement 27 s'ouvrant vers l'arrière, dans lequel peut être montée une plaque catadioptre 28.

La cale 15 fixée sous la semelle à l'aide de vis (non montrées) est avantageusement métallique, notamment réalisée en alliage cupro-aluminium. La fixation de la cale est réalisée avec une possibilité de réglage suivant la direction longitudinale par coulissement des vis de fixation de la cale 15 dans des fenêtres oblongues telles que 29 prévues dans la semelle de chaussure.

La cale 15, vue en plan (figure 1), a une forme générale sensiblement rectangulaire dont la grande dimension H (direction transversale de la cale) est orientée parallèlement à l'axe X lorsque la chaussure est dans sa position moyenne normale sur la pédale. La petite dimension l de la cale est orientée suivant la direction longitudinale et est, de préférence, inférieure à la moitié de la dimension H (H/l > 2).

La cale 15 comporte deux rebords inférieurs transversaux d'accrochage 30, 31 en saillie respectivement vers 1 avant et vers l'arrière.

Les rebords 30, 31 délimitent, avec la surface inférieure de la semelle, deux rainures transversales 32, 33 propres à recevoir respectivement les barres 17 et 7. Les rainures 32, 33 débouchent à leurs extrémités transversales de sorte que les barres 17, 7 peuvent s'étendre au-delà desdites extrémités transversales des rainures. Les rebords 30, 31, en position normale de fixation, sont engagés respectivement sous les barres 17, 7 des arceaux avant et arrière de la pédale, et sont encadrés, transversalement, respectivement par les bras 18 et 8.

Les quatre extrémités des deux rebords de la cale sont munies de pans coupés respectivement 34a, 34b et 35a, 35b, de préférence parallèles deux à deux pour les extrémités opposées.

Comme expliqué plus en détail plus loin, les pans coupés 35a, 35b permettent le décrochage pour une torsion du pied du cycliste vers l'extérieur (c'est-à-dire que le talon du pied s'écarte de l'axe de la bicyclette vers l'extérieur). Le pan coupé 35a se trouve à l'extrémité avant extérieure de la cale 15, tandis que le pan coupé 35b se trouve à l'extrémité opposée arrière intérieure.

Les pans coupés 34a, 34b permettent le décrochage pour une torsion du pied vers l'intérieur.

L'angle i d'inclinaison des pans coupés 35a, 35b par rapport à la direction transversale de la cale est voisin ou égal à 20°. L'angle d'inclinaison f des pans coupés 34a, 34b avec la direction transversale de la cale 15 est supérieur à i et est de préférence de l'ordre de 30°.

L'inclinaison des pans coupés par rapport à la direction transversale est telle que les dièdres formés avec les pans coupés tournent leur convexité vers l'extérieur, c'est-à-dire vers l'avant pour les pans coupés avant 34a, 35a, et vers l'arrière pour les pans coupés arrière 34b, 35b.

La surface inférieure de la cale 15 est sensiblement constituée par deux faces planes 36, 37 présentant des inclinaisons différentes relativement au plan moyen P, lorsque la cale 15, fixée à la chaussure, est en place sur la pédale. La face 36 a une inclinaison relativement faible à partir du bord avant de la cale 15 vers l'arrière ; la face 37, inclinée plus fortement en sens inverse de manière à remonter vers l'arrière, constitue une rampe provoquant le recul de la barre 7 lorsque la chaussure exerce une pression sensiblement verticale sur cette barre. Les deux surfaces 36 et 37 forment sensiblement un dièdre dont la convexité est tournée vers le bas, l'arête du dièdre étant située vers l'arrière de la cale 15.

Les surfaces de fond 38, 39, des rainures 32, 33, sensiblement orthogonales au plan P lorsque la cale 15 est fixée, avec la chaussure, sur la pédale, forment des surfaces de butée frontale coopérant avec les barres 17 et 7.

Ces surfaces 38, 39 sont avantageusement agencées sous la forme de V ouverts, vues en plan comme sur la figure 3. La pointe rognée des V est tournée respectivement vers l'avant pour la surface 38 et vers l'arrière pour la surface 39. Les parties 38a, 38b de la surface 38, inclinées légèrement vers l'arrière par rapport à la direction transversale moyenne de la came, forment avec cette direction un angle j d'environ 10°.

Les parties 39a, 39b de la surface arrière 39 forment avec la direction transversale moyenne un angle k, de préférence plus faible, par exemple d'environ 5°.

Cet agencement des pentes sur la cale 15 permet d'obtenir des duretés d'ouverture différentes, lors de la rotation de la cale comme illustré sur la figure 3.

Pour un angle de rotation de 0 à 5° environ, la dureté est presque nulle, ce qui donne une liberté angulaire au pied du cycliste. Cette liberté angulaire est obtenue avec un léger rappel élastique du fait des parties moyennes 38c, 39c (des surfaces 38, 39) parallèles à la direction transversale moyenne de la cale 15. Ces parties 38c, 39c correspondent, en quelque sorte, à la pointe du V des surfaces 38, 39 qui a été rognée.

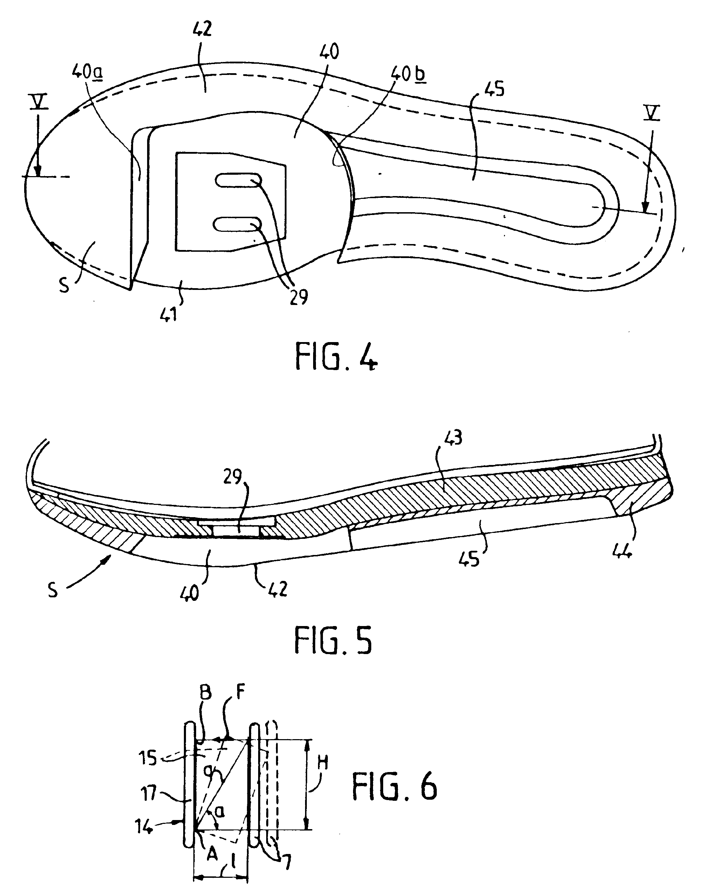

Lors d'une torsion du pied du cycliste vers l'extérieur (le talon du pied s'écarte vers l'extérieur de la bicyclette) la cale 15 tourne comme représenté sur la figure 3. Le centre de rotation de la semelle de la chaussure est alors constitué par le point A (voir également figure 6) situé à l'extrémité extérieure de la surface 38 en appui contre la butée fixe 14. Pour les torsions vers l'intérieur, c'est l'autre extrémité B de la surface 38 qui vient en appui contre la barre 17 et qui constitue le centre de rotation pour la chaussure.

En variante, la surface de fond 38 pourrait, vue en plan, être limitée par deux côtés d'un triangle dont le sommet serait en appui contre la butée fixe, et dont la base serait formée par la surface de fond 39.

Les barres 7 et 17, et la cale 15 sont agencées de manière que la chaussure, fixée sur la pédale, puisse se déplacer transversalement, c'est-à-dire parallèlement à l'axe X, d'une certaine amplitude. Pour cela, les barres 7 et 17 s,étendent sensiblement suivant toute la largeur de la pédale 1 tandis que la dimension transversale H de la cale 15 est inférieure à la distance entre les faces intérieures en regard des bras 8 ou 18. De préférence, un jeu transversal de 7 mm environ est prévu entre la cale et les bras 8, 18 de sorte que la cale 15 et la chaussure peuvent se déplacer latéralement de 7 mm. Ceci permet au cycliste d'ajuster de lui-même la position latérale de son pied sur la chaussure en fonction de sa morphologie.

La longueur du rebord avant 30 peut être réduite pour faciliter le décrochage de la chaussure relativement à la pédale en cas de chute avant.

La semelle S de la chaussure C comporte un évidement 40 (figures 4 et 5), dans la région située au-dessous de l'articulation du gros orteil. Cet évidement 40, comme visible sur la figure 2, est propre à recevoir la partie supérieure, en particulier la partie supérieure arrière, de la pédale. La cale 15 est destinée à être fixée dans l'évidement 40 qui s'ouvre en 41 sur le bord intérieur de la chaussure et qui est fermé par une bordure 42 du côté extérieur. L'évidement 40 est suffisamment profond pour que la cale 15 ne soit pas en contact avec le sol lorsque le cycliste marche sur le sol avec une telle chaussure. Autrement dit, la cale 15 est située à l'intérieur de la surface enveloppe prolongeant fictivement la semelle S dans l'évidement 40. Les dimensions de cet évidement sont suffisantes pour permettre les débattements des différentes pièces du dispositif de fixation lors de la mise en place de la chaussure sur la pédale et de sa séparation. Le bord avant 40a de l'évidement 40 s'étend transversalement selon un plan incliné vers l'avant, tandis que le bord arrière 40b forme un arc de courbe, sensiblement circulaire, tournant sa concavité vers l'avant.

De préférence, la semelle S comprend une semelle interne 43 en matière rigide, comportant notamment une plaque métallique (non représentée) de fixation pour la cale 15, et une semelle externe 44 en matière relativement souple dans laquelle est prévu le susdit évidement 40. Cette semelle 44 peut comporter, dans la partie longitudinale moyenne, une rainure 45 qui débouche dans l'évidement 40 et qui est fermée vers l'arrière.

Il est à noter que la semelle de chaussure appuie uniquement sur les barres 7 et 17, la cale 15 n'appuyant pas sur le fût 3 comme visible sur la figure 2. La présence de la semelle rigide 43 permet au cycliste de pédaler sans ressentir la pression des barres 7 et 17. La semelle souple 44, courbée (convexe vers l'extérieur) à l'endroit du métatarse, facilite la marche à pied.

Le fonctionnement du dispositif de fixation selon l'invention est le suivant.

Lorsque le cycliste veut réaliser la liaison entre sa chaussure équipée de la cale 15 et la pédale correspondante, il opère de la manière suivante.

La pédale 1 est conçue de manière qu'au repos son bord avant 22 soit relevé alors que sa partie arrière 26 est plus basse.

Le cycliste engage la barre 17 dans la rainure 32 et exerce une poussée sur son pied vers le bas et vers l'avant de sorte que la surface inclinée 37 va repousser la barre 7 vers l'arrière à l'encontre du couple exercé par les ressorts 9 et 10. La barre 7 va s'effacer permettant le passage du rebord arrière 31. Dès que la barre 7 se trouve en face de la rainure 33, l'action des ressorts 9 et 10 provoque un léger mouvement vers l'avant de la barre 7 qui s'engage dans la rainure 33. La chaussure est alors fixée sur la pédale 1.

Il est à noter que l'appui de la chaussure sur la pédale s'effectue uniquement au niveau des barres 7 et 17, la cale 15 n'étant pas en appui, par sa surface inférieure, contre le fût 3.

La longueur de la cale 15 (c'est-à-dire sa dimension l suivant la direction longitudinale) étant la plus réduite possible ; la longueur de la pédale peut être réduite. l'encastrement, et donc l'évidement 40, dans la semelle S est faible ce qui permet de conserver une grande surface de semelle S réservée à la marche.

Comme déjà expliqué, lors d'une rotation vers l'extérieur, la cale 15, pratiquement rectangulaire, pivote autour de son angle avant gauche A en s'appuyant sur la butée frontale ou barre 17 et en repoussant la barre 7 sollicitée élastiquement pour le maintien. Avec un tel système, la semelle S de la chaussure peut effectuer en torsion une grande course d'environ 60° tout en étant soumise à un rappel élastique tendant à la ramener dans l'axe longitudinal de la pédale. Naturellement, un cycliste ne pourrait pas effectuer volontairement une torsion, aussi importante angulairement, de 60°. Ceci constitue une garantie contre des déchaussages intempestifs.

Le déchaussage est obtenu par une libération vers le haut de la chaussure, relativement à la pédale, lorsqu'un angle d'ouverture en torsion, supérieur à ce qui peut être rencontré dans le pédalage le plus brutal, a été atteint, cet angle restant cependant relativement facile à provoquer par le cycliste dans un mouvement volontaire.

L'expérience a montré qu'un angle de 20°, talon du pied vers l'extérieur, est convenable. C'est ce qui explique que le pan coupé arrière 35b et de préférence également le pan coupé avant 35a forment un angle i égal à 20° avec la direction transversale moyenne. Lorsqu'une torsion vers l'extérieur de 20° a été atteinte, comme représenté sur la figure 3, le pan coupé 35b devient tangent à la barre arrière 7 et la cale 15 n'est plus retenue vers le haut. La chaussure est alors libérée de la pédale ; cette libération est encore plus nette si le pan coupé avant 35a a la même inclinaison que le pan coupé arrière 35b puisqu'il y a libération simultanée à l'avant et à l'arrière.

Il est à noter cependant que la libération arrière au niveau d'un seul pan coupé arrière 35b (de préférence situé à l'angle arrière intérieur de la cale,, pour assurer le décrochage par torsion vers l'extérieur) est suffisante et que le pan coupé avant 35a pourrait avoir une inclinaison plus forte par rapport à la direction transversale moyenne et rester légèrement engagé sous la barre avant 17. En effet, du fait de la traction vers le haut exercé par le cycliste sur la chaussure, dès que le rebord arrière 31 est libéré vers le haut, la pédale, selon la représentation de la figure 2, a tendance à tourner dans le sens d'horloge autour de l'axe 5 et à se séparer de la chaussure, ce qui permet le dégagement du rebord avant 30 vers l'arrière relativement à la barre 17.

Il est préférable de prévoir, pour le déchaussage vers l'intérieur (talon du pied vers la bicyclette), un angle de déchaussage plus important par exemple de 25 ou 30° (angle f formé entre le pan coupé 34b, et de préférence également 34a, avec la direction transversale moyenne) pour mieux se protéger contre un déchaussage intempestif qui risquerait d'amener le pied en contact avec la roue arrière par exemple. Ce déchaussage possible vers l'intérieur à 25 ou 30° est surtout utile pour déchausser lorsque le cycliste est à terre après une chute.

Finalement, il apparaît que pour obtenir la libération de la chaussure relativement à la pédale, ce n'est pas tellement une dureté d'ouverture qui doit être vaincue, mais plutôt un angle d'ouverture qui doit etre atteint sous une dureté sensiblement constante.

En effet, comme visible d'après la figure 6, si on désigne par F la force exercée par la barre 7 à l'extrémité de la cale opposée au centre de rotation A, et si l'on désigne par q la diagonale de la cale 15, le moment résistant que doit vaincre le cycliste pour faire tourner sa chaussure est M = Fqsin.a. L'angle a est celui formé entre la diagonale et la direction longitudinale moyenne.

La force du ressort augmente linéairement pendant l'ouverture tandis que le bras de levier qsina diminue pendant l'ouverture. Donc la dureté d'ouverture reste sensiblement constante. On amortit ainsi les torsions de faible amplitude lors du pédalage. Par contre, cette force peut avoir une valeur relativement faible puisque le déchaussage ne dépend pas de la force à vaincre mais de l'angle à atteindre.

Selon la présente invention, les réglages angulaire et latéral sont obtenus par la pédale. Ils peuvent être modifiés à tout instant et automatiquement suivant le choix de l'utilisateur qui ne sera pas obligé d'effectuer un réglage manuel fastidieux de la cale sous la semelle de la chaussure.

La retenue élastique s'exerce dans le sens d'une torsion du pied dans un plan parallèle à la surface supérieure de la pédale.

La libération de la chaussure s'effectue vers le haut.

L'angle (i) de libération vers le haut est moins important que l'angle pouvant etre obtenu par le rappel élastique. Néanmoins, l'angle (i) qui a été choisi pour la libération vers le haut est supérieur à l'angle que la chaussure ferait avec l'axe longitudinal de la pédale dans des mouvements brusques de pédalage acrobatique par exemple "en danseuse". Cet angle a été déterminé, selon l'invention, à environ 20° pour le déchaussage.

La liberté angulaire et la liberté latérale sont obtenues automatiquement par la pédale.

## Revendications

1. Dispositif de fixation d'une chaussure sur une pédale de bicyclette ou d'engin analogue, ayant un corps de pédale (2) monté rotatif autour d'un axe transversal (X), le dispositif de fixation comportant :
- d'une part, sur le corps de pédale (2), un moyen de butée frontale (14) situé en avant de l'axe transversal et un organe d'accrochage arrière (6) situé en arrière de l'axe (X), et comprenant un bord d'accrochage rectiligne (7), sensiblement parallèle à l'axe (X), pouvant être déplacé suivant une direction sensiblement orthogonale à cet axe, à l'encontre d'un effort de rappel élastique ;
- d'autre part, des moyens de retenue vers le haut (14) prévus sur le corps de pédale (2), à l'avant de l'axe (X) pour coopérer avec des moyens de retenue complémentaires (30) prévus sous la semelle ;
- d'autre part, enfin, destinée à être fixée sous la semelle de la chaussure, une cale (15) comportant, vers l'avant un moyen de butée frontale (38) conjugué de celui de la pédale, et, à l'arrière, un moyen d'accrochage (31) propre à coopérer avec le bord d'accrochage arrière du corps de pédale, l'enclenchement de la chaussure sur la pédale pouvant être obtenu par une action de pression du pied sur la pédale,
ladite cale (15) vue en plan ayant une forme générale sensiblement rectangulaire et comportant au moins un rebord inférieur d'accrochage (31) en saillie vers l'arrière délimitant une rainure transversale (33) débouchant à chaque extrémité transversale, au moins une extrémité transversale du rebord arrière étant limitée par une paroi inclinée suivant un angle (i) déterminé par rapport à la direction transversale de la cale, le décrochage étant obtenu par échappement du rebord (31) vers le haut pour une torsion d'amplitude égale à l'angle (i), dans un sens donné,
la susdite paroi inclinée du rebord arrière étant constituée par un pan coupé (35b) formant, avec la partie voisine du rebord arrière, un dièdre tournant sa convexité vers l'extérieur,
le moyen de butée frontale et le moyen de retenue vers le haut étant constitués par un seul et meme organe d'accrochage avant (14), situé en avant de l'axe (X), comportant un bord d'accrochage et de butée frontale (16) pratiquement rectiligne parallèle à l'axe (X), caractérisé par le fait :
- que la grande dimension (H) de la cale (15) est orientée parallèlement à l'axe (X) du fût de la pédale ;
- que l'organe d'accrochage avant (14) est fixe relativement à la pédale, le centre de rotation, lors d'une torsion du pied, étant constitué par un point (A, B) situé contre l'organe d'accrochage avant (14) de sorte que la cale (15) peut effectuer en torsion une grande course, tout en restant soumise à un rappel élastique ;
et que l'angle (i) est inférieur à l'angle de torsion maximum pour lequel le dispositif exerce encore un rappel élastique sur la cale.

2. Dispositif selon la revendication 1, caractérisé par le fait que la course en torsion pendant laquelle la cale (15) reste soumise à un rappel élastique est d'environ 60°.

3. Dispositif selon la revendication 1 ou 2, caractérisé par le fait que le bord d'accrochage arrière est formé par une barre (7) et l'organe d'accrochage avant (14) est formé par une barre (17), ces barres (7, 17) étant situées au-dessus du plan tangent supérieur au fût (3) du corps de pédale, dans lequel est prévu un logement (4) pour l'axe transversal (5) de pédale.

4. Dispositif selon l'une des revendications précédentes, caractérisé par le fait que chacune des extrémités transversales du rebord arrière (31) comporte un pan coupé (34b, 35b).

5. Dispositif selon l'une des revendications précédentes, caractérisé par le fait que la cale (15) comporte également un rebord inférieur d'accrochage en saillie vers l'avant (30), délimitant une rainure transversale (32) débouchant à chaque extrémité transversale et que les quatre extrémités des rebords (30, 31) de la cale (15) sont munies de pans coupés (34a, 34b ; 35a, 35b), notamment parallèles deux à deux aux extrémités opposées, les dièdres formés par ces pans coupés tournant leur convexité vers l'extérieur.

6. Dispositif selon la revendication 4 ou 5, caractérisé par le fait que le(s) pan(s) coupé(s) (35b, 35a) prévu(s) pour le décrochage par une rotation ou torsion du pied du cycliste vers l'extérieur est (sont) incliné(s) de manière à permettre le décrochage pour un angle (i) inférieur à celui (f) nécessaire pour le décrochage par une torsion du pied vers l'intérieur.

7. Dispositif selon la revendication 6, caractérisé par le fait que l'angle d'inclinaison (i) du pan coupé (35b, 35a), pour le décrochage vers l'extérieur, par rapport à la direction transversale de la cale (15), est voisin de ou égal à 20°, tandis que l'angle d'inclinaison (f) du pan coupé pour un décrochage par torsion vers l'intérieur est supérieur, en particulier de l'ordre de 30°.

8. Dispositif selon l'une quelconque des revendications précédentes, caractérisé par le fait que les bords d'accrochage avant et arrière (16, 7) prévus sur le corps de pédale (2), et les rainures transversales (32, 33) de la cale (15) propres à coopérer avec ces bords, sont agencés pour laisser une liberté en coulissement transversal de quelques millimètres, en particulier de l'ordre de 7 mm, pour la semelle et la chaussure relativement à la pédale.

9. Dispositif selon l'une quelconque des revendications précédentes dans lequel la cale comporte deux rainures transversales (32, 33) respectivement à l'avant et à l'arrière, ces rainures comportant des surfaces de fond (38, 39) formant des surfaces de butée frontale, caractérisé par le fait que lesdites surfaces de fond (38, 39) sont agencées sous la forme de V ouverts, la pointe des V étant tournée respectivement vers l'avant pour la surface avant (38) et vers l'arrière pour la surface arrière (39).

10. Dispositif selon l'une quelconque des revendications précédentes, caractérisé par le fait que l'écartement entre le bord de butée frontale (16) et le bord d'accrochage arrière (7) est au plus égal à la moitié de l'étendue transversale (Y) de ces bords.

11. Dispositif selon l'une quelconque des revendications précédentes pour une pédale dont le corps (2) comporte un fût (3) muni d'un logement (4) destiné à recevoir l'axe transversal (X, 5), caractérisé par le fait que ledit écartement entre les bords (6, 16) est sensiblement égal à la dimension extérieure (d) du fût.

12. Dispositif selon l'une quelconque des revendications précédentes, caractérisé par le fait que l'organe de butée frontale (14) est constitué par un fil métallique, notamment un fil d'acier à grande résistance.

13. Dispositif selon la revendication 12, caractérisé par le fait que le fil métallique forme un arceau et présente, aux extrémités d'une partie rectiligne (16) constituant le bord de butée frontale, deux parties recourbées (18), sensiblement orthogonales au plan moyen (P) de la pédale, propres à encadrer transversalement le rebord (30) en saillie vers l'avant, de la cale (15).

14. Dispositif selon la revendication 12 ou 13, caractérisé par le fait que le fil d'acier constituant la butée frontale (14) a un diamètre d'environ 3 mm.

15. Dispositif selon l'une quelconque des revendications précédentes, caractérisé par le fait que l'organe d'accrochage arrière (6) forme un arceau comprenant une barre transversale rectiligne (7) munie à ses deux extrémités de parties recourbés (8) formant des bras (8) orientés radialement, pour une articulation autour d'un axe transversal (11), le rebord arrière (31) de la cale étant propre à s'engager sous la barre (7) en étant encadré transversalement par les bras (8).

16. Dispositif selon la revendication 15 dans lequel les extrémités des bras (8) éloignés de la barre (7) sont enroulés de manière à constituer deux ressorts de torsion (9, 10), caractérisé par le fait que les ressorts de torsion (9, 10) sont logés dans un évidement (23) du corps de pédale (2), les extrémités (12) des ressorts de torsion étant dirigées vers l'arrière et prenant appui contre une paroi (13).

17. Semelle de chaussure cycliste destinée à être équipée d'une cale (15, 115) pour un dispositif de fixation selon l'une quelconque des revendications 1 à 16, caractérisée par le fait qu'elle comporte un évidement (40) propre à recevoir la partie supérieure de la pédale.

18. Semelle selon la revendication 17, caractérisée par le fait qu'elle comprend une semelle interne (43) en matière rigide, et une semelle externe (44) en matière relativement souple dans laquelle est prévu le susdit évidement (40), la surface enveloppe de la semelle externe étant située au-delà de la cale.

## Patentansprüche

1. Vorrichtung zur Befestigung eines Schuhs am Pedal eines Fahrrades oder eines analogen Mittels, die einen Pedalkörper (2) aufweist, der drehbar um eine Längsachse (X) angeordnet ist, wobei die Befestigungsvorrichtung umfaßt:
- einerseits ein vorderes Anschlagmittel (14) auf dem Pedalkörper (2), das sich vor der Querachse (X) befindet, und ein hinteres Halteorgan (6), das sich hinter der Achse (X) befindet und eine geradlinige Haltevorrichtung (7) umfaßt, die im wesentlichen parallel zur Achse (X) verläuft und gegen eine Rückstellkraft im wesentlichen senkrecht zur Achse (X) verschiebbar ist;
- andererseits nach oben gerichtete Haltemittel (14), die auf dem Pedalkörper (2) vor der Achse (X) vorgesehen sind, um mit komplementären Haltemitteln (30) zusammenzuwirken, die unter der Sohle vorgesehen sind;
- andererseits schließlich einen Keil (15), der zur Befestigung unter der Schuhsohle bestimmt ist und der ein nach vorne gerichtetes, vorderes Anschlagmittel (38), das dem des Pedals zugeordnet ist, und ein hinteres Haltemittel (31) umfaßt, das mit der hinteren Haltevorrichtung des Pedalkörpers zusammenwirken kann, wobei die Befestigung des Schuhs am Pedal durch einen Druck des Fußes auf das Pedal erfolgen kann,
wobei der Keil (15) in der Draufsicht eine im wesentlichen rechteckige Allgemeinform aufweist und mindestens eine untere Randleiste (31) umfaßt, die nach hinten übersteht und eine Quernut (33) begrenzt, welche an jedem Ende ausläuft, wobei mindestens ein Ende der hinteren Randleiste durch eine entsprechend einem Winkel (i), bezogen auf die Querrichtung des Keils, geneigte Wand begrenzt ist,
wobei das Aushaken durch das Ausklinken der Randleiste (31) nach oben durch eine Drehung in eine gegebene Richtung mit einer Amplitude gleich dem Winkel (i) erfolgt,
wobei die geneigte Wand der hinteren Randleiste aus einer abgeschrägten Kante (35b) besteht, die mit dem benachbarten Teil der hinteren Randleiste einen Dieder bildet, dessen konvexer Teil nach außen gerichtet ist,
wobei das vordere Anschlagmittel sowie das nach oben gerichtete Haltemittel aus ein- und demselben vorderen Halteorgan (14) bestehen, welches sich vor der Achse (X) befindet, umfassend eine praktisch geradlinige Halte- und Anschlagvorrichtung (16), die parallel zur Achse (X) verläuft,
dadurch gekennzeichnet,
daß die lange Seite (H) des Keils (15) parallel zur Achse (X) des Pedalschaftes ausgerichtet ist;
daß das vordere Halteorgan (14) in Bezug auf das Pedal fixiert ist, wobei der Mittelpunkt der Drehung bei einer Torsion des Fußes von einem Punkt (A, B) gebildet wird, welcher an dem vorderen Halteorgan (14) so liegt, daß der Keil (15) während der Torsion eine große Bahn durchlaufen kann, während er noch immer einer Rückstellkraft unterworfen ist;
und daß der Winkel (i) kleiner ist, als der maximale Drehwinkel, bei dem die Vorrichtung noch immer eine Rückstellkraft auf den Keil ausübt.

2. Vorrichtung gemäß Anspruch 1, dadurch gekennzeichnet, daß der Winkel der Bahn, bei dem auf den Keil (15) während der Torsion immer noch eine Rückstellkraft wirkt, ungefähr 60° beträgt.

3. Vorrichtung gemäß Anspruch 1 oder 2, dadurch gekennzeichnet, daß die hintere Haltevorrichtung von einem Stab (7) gebildet wird und daß das vordere Halteorgan (14) von einem Stab (17) gebildet wird, wobei die Stäbe (7, 17) über der Tangentialebene oberhalb des Schaftes (3) des Pedalkörpers liegen, in welchem ein Sitz (4) für die Pedalquerachse (5) vorgesehen ist.

4. Vorrichtung gemäß einem der vorhergehenden Ansprüche, dadurch gekennzeichnet, daß jedes der Enden der hinteren Randleiste (31) eine abgeschrägte Kante (34b, 35b) umfaßt.

5. Vorrichtung gemäß einem der vorhergehenden Ansprüche, dadurch gekennzeichnet, daß der Keil (15) auch eine untere, nach vorne überstehende Randleiste (30) umfaßt, die eine Quernut begrenzt, welche an jedem der beiden Enden ausläuft und daß die vier Enden der Randleisten (30, 31) des Keils (15) mit abgeschrägten Kanten (34a, 34b; 35a, 35b) versehen sind, wobei insbesondere die einander jeweils gegenüberliegenden Enden paarweise parallel zueinander sind und wobei die von den abgeschrägten Kanten gebildeten Dieder nach außen gewölbt sind.

6. Vorrichtung gemäß Anspruch 4 oder 5, dadurch gekennzeichnet, daß die abgeschrägte(n) Kante(n) (35b, 35a), die zum Aushaken durch Rotation oder Torsion des Fußes des Radfahrers nach außen vorgesehen ist (sind), so geneigt ist (sind), daß das Aushaken durch einen Winkel (i) ermöglicht wird, der kleiner ist als der Winkel (f), welcher zum Aushaken durch Torsion des Fußes nach innen erforderlich ist.

7. Vorrichtung gemäß Anspruch 6, dadurch gekennzeichnet, daß der Neigungswinkel (i) der abgeschrägten Kante (35b, 35a) zum Aushaken nach außen in Bezug auf die Querrichtung des Keils (15) etwa 20° beträgt, während der Neigungswinkel (f) der abgeschrägten Kante zum Aushaken durch Torsion nach innen größer ist, insbesondere etwa 30°.

8. Vorrichtung gemäß einem der vorhergehenden Ansprüche, dadurch gekennzeichnet, daß die vorderen und hinteren Haltevorrichtungen (16, 7), die sich auf dem Pedalkörper (2) befinden, und die Quernuten (32, 33) des Keils (15), die mit den Haltevorrichtungen zusammenwirken können, so angeordnet sind, daß für die Querbewegung ein Spielraum für die Sohle und den Schuh relativ zum Pedal von einigen Millimetern, insbesondere 7 mm, bleibt.

9. Vorrichtung gemäß einem der vorhergehenden Ansprüche, wobei der Keil zwei Quernuten (32, 33) aufweist, nämlich eine vordere und eine hintere, wobei die Nuten Bodenflächen (38, 39) umfassen, die vordere Anschlagflächen bilden, dadurch gekennzeichnet, daß die Bodenflächen (38, 39) jeweils die Form eines offenen V bilden, wobei die Spitze des V bei der vorderen Fläche (38) nach vorne und bei der hinteren Fläche (39) nach hinten gerichtet ist.

10. Vorrichtung gemäß einem der vorhergehenden Ansprüche, dadurch gekennzeichnet, daß der Abstand zwischen der vorderen Anschlagvorrichtung (16) und der hinteren Haltevorrichtung (7) höchstens die Hälfte der transversalen Breite (Y) dieser Vorrichtungen beträgt.

11. Vorrichtung gemäß einem der vorhergehenden Ansprüche für ein Pedal, dessen Körper (2) einen Schaft (3) umfaßt, welcher einen Sitz (4) zur Aufnahme einer Querachse (X, 5) aufweist, dadurch gekennzeichnet, daß der Abstand zwischen den Vorrichtungen (6, 16) im wesentlichen dem Außendurchmesser (d) des Schaftes entspricht.

12. Vorrichtung gemäß einem der vorhergehenden Ansprüche, dadurch gekennzeichnet, daß das vordere Anschlagorgan (14) ein Metalldraht, insbesondere ein Draht aus hochfestem Stahl, ist.

13. Vorrichtung gemäß Anspruch 12, dadurch gekennzeichnet, daß der Metalldraht einen Bügel bildet und an den Enden eines geradlinigen Teils (16), der den vorderen Anschlag bildet, zwei gebogene Teile (18) aufweist, welche im wesentlichen senkrecht zur Mittelebene (P) des Pedals angeordnet und geeignet sind, die nach vorne überstehende Randleiste (30) des Keils (15) quer zu umschließen.

14. Vorrichtung gemäß Anspruch 12 oder 13, dadurch gekennzeichnet, daß der Stahldraht, der den vorderen Anschlag (14) bildet, einen Durchmesser von etwa 3 mm besitzt.

15. Vorrichtung gemäß einem der vorhergehenden Ansprüche, dadurch gekennzeichnet, daß das hintere Halteorgan (6) einen Bügel bildet, der einen geradlinigen Querstab (7) umfaßt, welcher an seinen beiden Enden gebogene Teile (8) aufweist, die radial angeordnete Arme (8) bilden, welche um eine Querachse (11) schwenkbar sind, wobei die hintere Randleiste (31) des Keils geeignet ist, unterhalb des Stabs (7) zum Eingriff zu gelangen und von den Armen (8) transversal umschlossen zu werden.

16. Vorrichtung gemäß Anspruch 15, worin die vom Stab (7) entfernten Enden der Arme (8) so zusammengerollt sind, daß sie zwei Torsionsfedern (9, 10) bilden, dadurch gekennzeichnet, daß die Torsionsfedern (9, 10) in einer Aussparung (23) des Pedalkörpers (2) sitzen, wobei die Enden (12) der Torsionsfedern nach hinten gerichtet sind und gegen eine Wand (13) in Anlage kommen.

17. Fahrradschuhsohle, die mit dem Keil (15) einer Befestigungsvorrichtung gemäß einem der Ansprüche 1 bis 16 versehen werden kann, dadurch gekennzeichnet, daß sie eine Aussparung (40) aufweist, die geeignet ist, den oberen Teil des Pedals aufzunehmen.

18. Sohle gemäß Anspruch 17, dadurch gekennzeichnet, daß sie eine innere Sohle (43) aus steifem Material und eine äußere Sohle (44) aus relativ elastischem Material aufweist, in welcher die Aussparung (40) vorgesehen ist, wobei die Mantelfläche der äußeren Sohle über den Keil hinausgeht.

## Claims

1. A device for fixing a shoe on the pedal of a bicycle or a similar machine, having a pedal body (2) mounted for rotation round a transverse axis (X), the fixing device comprising:
- on the one hand, on the pedal body (2), a front stop means (14) situated ahead of the transverse axis and a rear fastening element (6) situated behind the axis (X), and comprising a rectilinear fastening edge (7) substantially parallel to the axis (X), capable of being displaced along a direction substantially orthogonal to this axis against an elastic restoring force;
- on the other hand, upward retaining means (14) provided on the pedal body (2) ahead of the axis (X) to cooperate with complementary retaining means (30) provided beneath the sole;
- finally, moreover, a wedge (15) intended to be fixed beneath the sole of the shoe comprising towards the front, a front stop means (38) conjugate with that of the pedal and at the rear, a fastening means (31) capable of cooperating with the rear fastening edge of the pedal body, it being possible for the engagement of the shoe on the pedal to be obtained by a pressure action of the foot on the pedal,
the said wedge (15), having, viewed in plan, a substantially rectangular shape and comprising at least one lower rearwardly projecting fastening flange (31) delimiting a transverse groove (33) issuing at each transverse end, at least one transverse end of the rear flange being delimited by a side inclined along an angle (i) determined in relation to the transverse direction of the wedge, the disengagement being obtained by upward escape of the edge (31) by a twist of an amplitude equal to an angle (i) in a given direction,
the said inclined side of the rear flange being constituted by a cant (35b) forming with the adjacent portion of the rear flange, an outwardly convex dihedron,
the front stop means and the upward retaining means being constituted by one and the same front fixing element (14) situated ahead of the axis (X), comprising a practically straight fixing and stop edge (16) parallel to the axis (X),
characterized in that :
- the large dimension (H) of the wedge (15) is orientated parallel to the axis (X) of the barrel of the pedal;
- that the front fixing element (14) is fixed relative to the pedal, the centre of rotation during a twisting movement of the foot being constituted by a point (A, B) situated close to the front fixing element (14), so that the wedge (15) is capable of executing a large twisting travel, whilst remaining subjected to the elastic restoring force;
and that the angle (i) is smaller than the maximum angle of twist wherewith the device still exerts an elastic restoring force on the wedge.

2. A device according to claim 1, characterized in that the twisting movement during which the wedge (15) remains subjected to an elastic restoring force, is approximately 60°.

3. A device according to claim 1 or 2, characterized in that the rear fastening edge is formed by a bar (7), and the front fixing element (14) is formed by a bar (17), these bars (7, 17) being situated above the upper plane tangential to the barrel (3) of the pedal body wherein provision is made for a housing (4) for the transverse spindle (5) of the pedal.

4. A device according to one of the preceding claims, characterized in that each of the transverse ends of the rear flange (31) comprises a cant (34b, 35b).

5. A device according to one of the preceding claims, characterized in that the wedge (15) also comprises a lower forwardly projecting fastening flange (30), delimiting a transverse groove (32) issuing at each transverse end; and that the four ends of the flanges (30, 31) of the wedge (15) are provided with cants (34a, 34b; 35a, 35b) that are in particular, parallel in pairs with the opposite ends, the dihedrons formed by these cants being outwardly convex.

6. A device according to claim 4 or 5, characterized in that the cants (35b, 35a) provided for the disengagement by rotation or an outwardly twisting movement of the cyclist's foot is (are) inclined so as to permit the disengagement with an angle (i) that is smaller than that (f) necessary for disengagement by an inwardly twisting movement of the foot.

7. A device according to claim 6, characterized in that, in relation to the transverse direction of the wedge (15), the angle of inclination (i) of the cant (35b, 35a) for the outward disengagement, approximates to or is equal to 20°, whilst the angle of inclination (f) of the cant for a disengagement by an inward twisting movement is larger and is in particular of the order of 30°.

8. A device according to any one of the preceding claims, characterized in that the front and rear fastening edges (16, 7) provided on the pedal body (2), and the transverse grooves (32, 33) of the wedge (15) capable of cooperating with these edges are arranged to leave scope for transverse sliding of a few millimetres, in particular of the order of 7 mm, for the sole and the shoe in relation to the pedal.

9. A device according to any one of the preceding claims wherein the wedge comprises two transverse grooves (32, 33) at the front and rear respectively, these grooves comprising end surfaces (38, 39) forming front stop surfaces, characterized in that the said end surfaces (38, 39) are arranged in the form of open Vs, the point of the V being respectively turned towards the front for the front surface (38) and towards the rear for the rear surface (39).

10. A device according to any one of the preceding claims, characterized in that the distance between the edge of the front stop (16) and the rear fastening edge (7) is at most equal to half the transverse dimension (Y) of these edges.

11. A device according to any one of the preceding claims for a pedal whose body (2) comprises a barrel (3) provided with a housing (4) intended to receive the transverse spindle (X, 5) characterized in that the said distance between the edges (6, 16) is substantially equal to the outer dimension (d) of the barrel.

12. A device according to any one of the preceding claims, characterized in that the front stop element (14) is constituted by a metallic wire, in particular a high strength steel wire.

13. A device according to claim 12, characterized in that the metallic wire forms a hoop and has, at the ends of one straight portion (16) constituting the front stop edge, two curved portions (18) that are substantially orthogonal to the median plane (P) of the pedal and capable of transversely surrounding the forwardly projecting flange (30) of the wedge (15).

14. A device according to claim 12 or 13, characterized in that the steel wire constituting the front stop (14) has a diameter of approximately 3 mm.

15. A device according to any one of the preceding claims, characterized in that the rear fastening element (6) forms a hoop comprising a straight transverse bar (7) provided at its two ends with curved portions (8) forming radially orientated arms (8) for an articulation round a transverse pin (11), the rear flange (31) of the wedge being capable of being engaged under the bar (7), whilst being transversely surrounded by the arms (8).

16. A device according to claim 15, wherein the ends of the arms (8) remote from the bar (7) are coiled so as to form two torsion springs (9, 10), characterized in that the torsion springs (9, 10) are accommodated in a recess (23) of the pedal body (2), the ends (12) of the torsion springs being directed rearwardly and bearing against a side (13).

17. A sole of a cyclist's shoe intended to be provided with a wedge (15, 115) for a fixing device according to any one of claims 1 to 16, characterized in that it comprises a recess (40) capable of receiving the upper part of the pedal.

18. A sole according to claim 17, characterized in that it comprises an inner sole (43) of a rigid material and an outer sole (44) of a relatively flexible material wherein provision is made for the above mentioned recess (40), the covering surface of the outer sole being situated beyond the wedge.
